# EUROPEAN PATENT APPLICATION

(11) **EP 4 576 376 A1**
(43) Date of publication of application: **25.06.2025**
(21) Application number: 23876218.1
(22) Date of filing: 25.06.2023
(51) Int. Cl.: H01M 50/342, H01M 50/569, H01M 50/15, H01M 10/42

(54) **BATTERY COVER PLATE, BATTERY, BATTERY PACK AND ENERGY STORAGE SYSTEM**

(30) Priority: 09.10.2022 CN 202222714190 U
(71) Applicant: Huawei Digital Power Technologies Co., Ltd., Shenzhen, Guangdong 518043 (CN)
(72) Inventor: WU, Weihuang, Shenzhen, Guangdong 518043 (CN)
(74) Representative: Maiwald GmbH
(86) International application number: PCT/CN2023/102170
(87) International publication number: WO 2024/078008

(57) **Abstract**

This application discloses a battery cover plate, a battery, a battery pack, and an energy storage system, to monitor a turned-on state of an explosion-proof valve of the battery. The battery cover plate includes a cover plate body, a first electrode assembly, and the explosion-proof valve, and a first through hole is provided on the cover plate body. The first electrode assembly includes a first insulating member and a first conductive sheet, the first insulating member is disposed on a first side of the cover plate body and covers the first through hole, a second through hole and a slot are provided on the first insulating member, a position of the second through hole is opposite to a position of the first through hole, one end of the slot communicates with the first through hole, and the other end extends to a side wall of the first insulating member and communicates with an exterior. The first conductive sheet is disposed on a side that is of the first insulating member and that faces away from the cover plate body. The explosion-proof valve is disposed on a surface on one side of the cover plate body and covers the first through hole, a notch is provided on the explosion-proof valve, the notch defines, on the explosion-proof valve, a flippable part in an open ring shape, and the flippable part is configured to: be flipped along the notch when subjected to force, and be in contact with the first conductive sheet after flipping.

## Description

### CROSS-REFERENCE TO RELATED APPLICATIONS

This application claims priority to Chinese Patent Application No. 202222714190.6, filed with the China National Intellectual Property Administration on October 9, 2022, and entitled "BATTERY COVER PLATE, BATTERY, BATTERY PACK, AND ENERGY STORAGE SYSTEM", which is incorporated herein by reference in its entirety.

### TECHNICAL FIELD

This application relates to the field of battery technologies, and in particular, to a battery cover plate, a battery, a battery pack, and an energy storage system.

### BACKGROUND

With continuous development of new energy technologies, batteries have been widely used in devices such as mobile phones, vehicles, and uncrewed aerial vehicles. In a process of using the battery, adverse conditions such as excessively high internal pressure may occur. Therefore, to ensure use safety of the battery and avoid adverse conditions such as explosion, an explosion-proof valve is usually mounted on the battery, and a notch is provided on the explosion-proof valve. When pressure inside the battery is greater than turning-on pressure of the explosion-proof valve, the notch of the explosion-proof valve ruptures, to release the pressure.

The explosion-proof valve is usually turned on at the end of a lifespan of the battery or when an abnormal reaction occurs inside the battery. If the battery is not maintained in a timely manner after the explosion-proof valve is turned on, electrolyte inside the battery and a negative electrode of a battery core react with water in an external environment, and a positive electrode of the battery core is oxidized. During this process, the battery continues to generate heat, resulting in a safety risk of the battery even after the explosion-proof valve is turned on. However, in a conventional technology, there is no mature solution for monitoring a turned-on state of the explosion-proof valve. Consequently, a safety problem of the battery after the explosion-proof valve is turned on has not been effectively resolved.

### SUMMARY

This application provides a battery cover plate, a battery, a battery pack, and an energy storage system, to monitor a turned-on state of an explosion-proof valve of the battery, and improve use safety of the battery.

According to a first aspect, this application provides a battery cover plate. The battery cover plate may include a cover plate body, a first electrode assembly, and an explosion-proof valve. The cover plate body has a first side, and a first through hole is provided on the cover plate body. The first electrode assembly may include a first insulating member and a first conductive sheet, the first insulating member is disposed on the first side of the cover plate body and covers the first through hole, a slot is provided on a first side wall of the first insulating member, the slot may penetrate the first insulating member in a thickness direction of the first insulating member, the slot communicates with the first through hole, the first conductive sheet is disposed on a side that is of the first insulating member and that faces away from the cover plate body, and the first conductive sheet covers at least a part of a region of the slot. The explosion-proof valve is disposed on a surface on one side of the cover plate body and covers the first through hole, a notch is provided on the explosion-proof valve, the notch may define a fastening part and a flippable part on the explosion-proof valve, a peripheral side of the flippable part has a connecting side connected to the fastening part, and a remaining position, on the peripheral side of the flippable part, other than the connecting side is separated from the fastening part by the notch. In this design, the flippable part may be flipped along the notch toward the slot when subjected to force, and be in contact with the first conductive sheet after flipping, to electrically connect the cover plate body to the first conductive sheet, in other words, to electrically connect the cover plate body to the first electrode assembly. In this way, the cover plate body may change from an uncharged state to a charged state. Therefore, a turned-on state of the explosion-proof valve can be monitored by detecting the charged state of the cover plate body according to a corresponding detection method, and this helps improve use safety of the battery.

In some possible implementation solutions, the connecting side of the flippable part may be disposed away from the first side wall of the first insulating member, to shorten an exhaust path of gas inside the battery, and therefore improve a gas exhaust rate.

In some possible implementation solutions, a protrusion may be provided on a surface that is of the flippable part and that faces the first side of the cover plate body, and the protrusion may be located in a region that is on the flippable part and that is away from the connecting side, to reduce difficulty of contact with the first conductive sheet.

In addition, an end face of the protrusion may be an arc-shaped surface, to improve reliability of contact between the protrusion and the first conductive sheet.

**In** some possible implementation solutions, the protrusion may include a first section and a second section, the second section may be located on a side that is of the first section and that is away from the flippable part, the first section may be in a columnar structure, and an end face that is of the second section and that is away from the first section is an arc-shaped surface. This design can ensure that the protrusion has a specific height, and therefore further improve the reliability of contact between the protrusion and the first conductive sheet.

For example, the second section may be in a hemisphere structure, so that processing difficulty of the protrusion can be reduced.

**In** some possible implementation solutions, the first through hole may be a tapered hole, and a diameter of the first through hole gradually decreases in a direction from the first side of the cover plate body to a second side of the cover plate body. **In** this design, after flipping of the flippable part, a diversion channel may be formed between the flippable part and an inner wall of the first through hole, and a diversion function of the diversion channel helps improve efficiency of exhausting the gas inside the battery.

**In** some possible implementation solutions, when a perimeter of an outer contour of the explosion-proof valve is C, an extension length of the notch may be greater than or equal to 0.6C and less than or equal to 0.8C. **In** this way, a specific width may exist between the notch and an edge of the explosion-proof valve, to improve connection reliability between the edge of the explosion-proof valve and the cover plate body; and an area of the flippable part is ensured, to improve an exhaust rate after flipping of the flippable part.

**In** some possible implementation solutions, a thickness at a position corresponding to the notch on the explosion-proof valve may be greater than or equal to 50 µm and less than or equal to 300 µm, to ensure processability of the explosion-proof valve, and reduce impact of a fluctuation of a residual thickness during processing on turning-on pressure of the explosion-proof valve.

**In** some possible implementation solutions, a shape of the explosion-proof valve includes, but is not limited to, a circle, a semicircle, a racetrack shape, a rectangle, or the like.

**In** some possible implementation solutions, a first mounting hole may be provided on the cover plate body, and a first avoidance hole may be provided at a position corresponding to the first mounting hole on the first insulating member. **In** this case, the first electrode assembly may further include a first pole, the first pole is disposed in the first mounting hole in an insulated manner, and the first pole may be electrically connected to the first conductive sheet through the first avoidance hole.

During specific implementation, the first electrode assembly may further include a first sealing ring, and the first sealing ring is compressed and disposed between an outer wall of the first pole and an inner wall of the first mounting hole, to insulate the first pole from the cover plate body. **In** addition, sealing at the first mounting hole can be further implemented, to reduce a risk of electrolyte leakage inside the battery.

According to a second aspect, this application further provides a battery. The battery may include a battery housing, a battery core, a voltage detection circuit, and the battery cover plate in any possible implementation solution of the first aspect. The battery housing is fastened to the battery cover plate to form a sealed cavity, the first side of the cover plate body is disposed facing an exterior of the sealed cavity, and the battery core is disposed in the sealed cavity. The battery cover plate may further include a second electrode assembly, the second electrode assembly may include a second insulating member and a second conductive sheet, the second insulating member is disposed on the first side of the cover plate body, and the second conductive sheet is disposed on a side that is of the second insulating member and that faces away from the cover plate body. The voltage detection circuit may be configured to detect a voltage between the second conductive sheet and the cover plate body. A charged/uncharged status of the cover plate body changes before and after flipping of the flippable part. Therefore, the voltage between the second conductive sheet and the cover plate body also changes accordingly. **In** this way, a turned-on state of the explosion-proof valve can be monitored by detecting the voltage between the second conductive sheet and the cover plate body through the voltage detection circuit, and this helps improve use safety of the battery.

For example, the first electrode assembly may be a negative electrode assembly of the battery, and the second electrode assembly may be a negative electrode assembly of the battery.

According to a third aspect, this application further provides a battery pack. The battery pack may include a battery management system and the battery according to the second aspect. The battery management system may be configured to: when the detected voltage of the voltage detection circuit jumps to a first voltage, determine that the explosion-proof valve is turned on. After the explosion-proof valve is turned on, the cover plate body is electrically connected to the first electrode assembly. Therefore, potentials of the cover plate body and the first electrode assembly are the same, and the first voltage between the battery cover plate and the second conductive sheet is a voltage between the first electrode assembly and the second electrode assembly.

According to a fourth aspect, this application further provides an energy storage system. The energy storage system includes a power converter and the battery pack according to the third aspect. The power converter may be configured to perform power conversion on a current input into the battery pack or a current output from the battery pack, or the power converter may be configured to perform power conversion on a voltage input into the battery pack or a voltage output from the battery pack.

### BRIEF DESCRIPTION OF DRAWINGS

FIG. 1 is a diagram of a possible structure of a battery pack according to an embodiment of this application;
FIG. 2 is a diagram of a structure of a battery according to an embodiment of this application;
FIG. 3 is a diagram of an exploded structure of a battery cover plate shown in FIG. 2;
FIG. 4 is a diagram of a structure of an explosion-proof valve according to an embodiment of this application;
FIG. 5 is a diagram of several possible plane structures of an explosion-proof valve according to an embodiment of this application;
FIG. 6 is a diagram of a cross-sectional structure of a battery cover plate according to an embodiment of this application; and
FIG. 7 is a diagram of a cross-sectional structure of the battery cover plate shown in FIG. 6 after an explosion-proof valve is turned on.

### Reference numerals:

100: battery; 110: battery cover plate; 111: cover plate body; 1111: first mounting hole; 1112: second mounting hole;
1113: first through hole; 112: first electrode assembly; 1121: first pole; 1122: first conductive sheet;
1123: first connecting part; 1124: first sealing ring; 1125: first insulating member; 11251: first avoidance hole;
11252: first groove; 11253: first side wall; 11254: slot; 113: second electrode assembly; 1131: second pole;
1132: second conductive sheet; 1133: second connecting part; 1134: second sealing ring; 1135: second insulating member;
11351: second avoidance hole; 11352: second groove; 1136: third insulating member; 11361: third avoidance hole;
11362: fourth avoidance hole; 11363: fifth avoidance hole; 114: explosion-proof valve; 1141: notch; 1142: flippable part;
1143: fastening part; 1144: protrusion; 11441: first section; 11442: second section;
120: battery housing; and 130: voltage detection circuit.

### DESCRIPTION OF EMBODIMENTS

To make objectives, technical solutions, and advantages of this application clearer, the following further describes this application in detail with reference to accompanying drawings. However, example implementations can be implemented in a plurality of forms, and should not be construed as being limited to implementations described herein. Identical reference numerals in the accompanying drawings denote identical or similar structures. Therefore, repeated descriptions thereof are omitted. Terms for expressing positions and directions in embodiments of this application are described by using the accompanying drawings as an example. However, changes may also be made as required, and all the changes fall within the protection scope of this application. The accompanying drawings in embodiments of this application are merely used to illustrate a relative position relationship and do not represent an actual scale.

It should be noted that specific details are set forth in the following descriptions to facilitate understanding of this application. However, this application can be implemented in a plurality of manners different from those described herein, and a person skilled in the art can perform similar promotion without departing from the connotation of this application. Therefore, this application is not limited to the specific implementations disclosed below.

An energy storage system is a device that can store electric energy by using a specific medium and release the stored energy to generate electricity when necessary, and may be used as a load balancing apparatus and a backup power supply in an electronic device (for example, a server or a supercomputer) or an electric vehicle. Based on different power consumption requirements of application scenarios of energy storage systems, the energy storage systems may be classified into a cabinet-level energy storage system and a container-level energy storage system. The energy storage system may usually include a battery pack and a power converter. The battery pack is a main device that stores electric energy in the energy storage system. The power converter may be configured to perform power conversion on a current input into the battery pack or a current output from the battery pack, or may be configured to perform power conversion on a voltage input into the battery pack or a voltage output from the battery pack, so that the energy storage system matches power of an external power supply device or electric device.

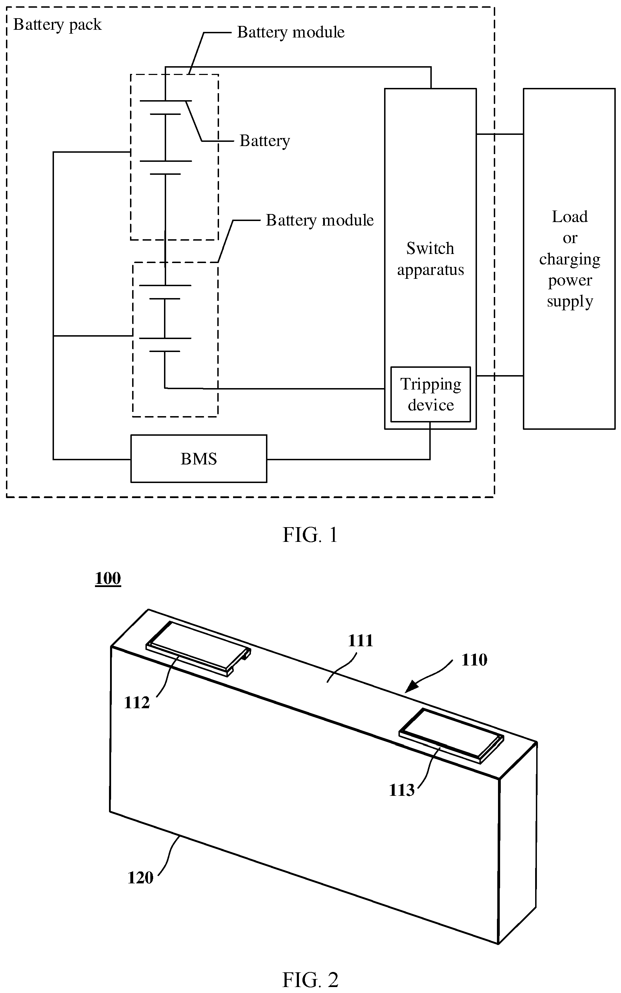

FIG. 1 is a diagram of a structure of a battery pack according to an embodiment of this application. The battery pack may include one or more battery modules. FIG. 1 shows an example of a case in which the battery pack includes two battery modules. During specific implementation, a plurality of battery modules are disposed in series, and battery modules located at two ends may be separately connected to a load, to form a discharging loop for discharging to the load. Alternatively, the battery modules located at the two ends may be separately connected to a charging power supply, to form a charging loop for charging each battery module.

Each battery module may further include one or more batteries. FIG. 1 shows an example of a case in which each battery module includes two battery cells. Based on an energy storage requirement of an energy storage system, a plurality of batteries in the battery module may be connected in series, or may be connected in parallel. FIG. 1 shows a case in which the plurality of batteries are connected in series. In addition, the battery module may usually further include a busbar, and the plurality of batteries may be connected in series or in parallel through the busbar.

In addition, to implement intelligent management and maintenance of the battery pack and ensure safe running of the battery pack, the battery pack may usually further include a battery management system (BMS). The BMS may monitor a status of the battery in real time, and may further learn of a status of the battery module, to cut off the charging loop/discharging loop in a timely manner when the battery module or the battery is faulty. In an implementation, a switch apparatus may be disposed in the charging loop/discharging loop of the battery pack, and a tripping device may be disposed in the switch apparatus. When detecting that a fault occurs in the battery module or the battery, the BMS may control the tripping device in the switch apparatus to perform tripping, to disconnect the battery module from the load or the charging power supply, so as to cut off the charging loop/discharging loop.

FIG. 2 is a diagram of a structure of a battery 100 according to an embodiment of this application. The battery 100 provided in this embodiment of this application includes, but is not limited to, a lithium-ion battery or a sodium-ion battery. The battery 100 may include a battery cover plate 110, a battery housing 120, and a battery core (not shown in the figure). The battery cover plate 110 and the battery housing 120 may be fastened to form a sealed cavity, and the battery core is disposed in the sealed cavity. It should be noted that the battery 100 provided in this embodiment of this application may be, but is not limited to, a regular-shaped battery, for example, a square battery or a round battery; and may be a possible irregular-shaped battery. This is not limited in this application. In FIG. 2, the square battery is used as an example for description.

In a specific embodiment, the battery cover plate 110 may include a cover plate body 111, and a first electrode assembly 112 and a second electrode assembly 113 that are disposed on the cover plate body. The first electrode assembly 112 and the second electrode assembly 113 may be a negative electrode assembly and a positive electrode assembly respectively. In this case, the first electrode assembly 112 may be electrically connected to a negative terminal of the battery core, and the second electrode assembly 113 may be electrically connected to a positive terminal of the battery core.

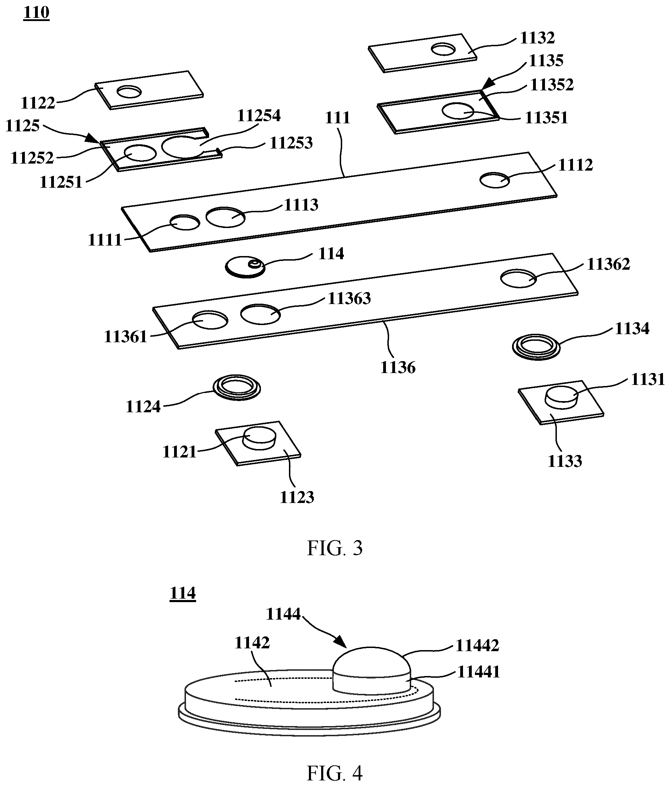

Refer to FIG. 2 and FIG. 3 together. FIG. 3 is a diagram of an exploded structure of the battery cover plate shown in FIG. 2. In this embodiment, the cover plate body 111 may be made of a conductive metal material, for example, including but not limited to aluminum or copper. The cover plate body 111 includes a first side and a second side that are opposite to each other. The first side of the cover plate body 111 faces an exterior of the battery 100, and the second side of the cover plate body 111 faces an interior of the battery 100. A first mounting hole 1111 and a second mounting hole 1112 are provided on the cover plate body 111, and the first mounting hole 1111 and the second mounting hole 1112 may extend from the first side of the cover plate body 111 to the second side of the cover plate body 111, to penetrate the cover plate body 111.

The first electrode assembly 112 may include a first pole 1121 and a first conductive sheet 1122. The first pole 1121 may be disposed in the first mounting hole 1111, a first end of the first pole 1121 is electrically connected to the negative terminal of the battery core located inside the battery 100, and a second end of the first pole 1121 extends from the first side of the cover plate body 111 and is electrically connected to the first conductive sheet 1122 located on the first side of the cover plate body 111. For example, the first pole 1121 and the first conductive sheet 1122 may be fastened and electrically connected through welding. The first conductive sheet 1122 may be configured for busbar connection, to implement a series connection or parallel connection between the battery 100 and another battery 100 in a same battery module.

In addition, the first pole 1121 and the negative terminal of the battery core may also be fastened and electrically connected through welding. In addition, to improve reliability of an electrical connection between the first pole 1121 and the battery core, a first connecting part 1123 may be disposed at the first end of the first pole 1121. In an extension direction perpendicular to the first pole 1121 (that is, a thickness direction of the cover plate body), a cross-sectional area of the first connecting part 1123 is greater than a cross-sectional area of the first pole 1121, so that a large welding surface can be implemented when the first pole 1121 is electrically connected to the battery core through the first connecting part 1123.

In this embodiment, the first pole 1121 and the first conductive sheet 1122 are separately insulated from the cover plate body 111. In an implementation, the first electrode assembly 112 may further include a first sealing ring 1124, and the first sealing ring 1124 is compressed and disposed between an outer wall of the first pole 1121 and an inner wall of the first mounting hole 1111. In an aspect, the first pole 1121 can be insulated from the cover plate body 111. In another aspect, sealing at the first mounting hole 1111 can be further implemented, to reduce a risk of electrolyte leakage through the first mounting hole 1111. In addition, the first electrode assembly 112 further includes a first insulating member 1125, and the first insulating member 1125 is disposed between the first conductive sheet 1122 and the cover plate body 111, to insulate the first conductive sheet 1122 from the cover plate body 111. A first avoidance hole 11251 may be provided at a position corresponding to the first mounting hole 1111 on the first insulating member 1125, so that the second end of the first pole 1121 may be electrically connected to the first conductive sheet 1122 through the first avoidance hole 11251. In addition, a first groove 11252 may be provided on a surface that is of the first insulating member 1125 and that faces away from the cover plate body 111, and the first conductive sheet 1122 may be embedded in the first groove 11252, to improve mounting reliability of the first conductive sheet 1122 on the first insulating member 1125. For example, a material of the first insulating member 1125 includes but is not limited to plastic, and a resistance value of the first insulating member 1125 may not be less than 200 mQ@500 V. In other words, in a test condition in which a voltage is 500 V, the resistance value of the first insulating member 1125 is 200 mQ or above.

The second electrode assembly 113 may include a second pole 1131 and a second conductive sheet 1132. The second pole 1131 may be disposed in the second mounting hole 1112, a first end of the second pole 1131 is electrically connected to the positive terminal of the battery core located inside the battery 100, and a second end of the second pole 1131 extends from the first side of the cover plate body 111 and is electrically connected to the second conductive sheet 1132 located on the first side of the cover plate body 111. For example, the second pole 1131 and the second conductive sheet 1132 may be fastened and electrically connected through welding. The second conductive sheet 1132 may be configured for busbar connection, to implement the series connection or parallel connection between the battery 100 and the another battery in the same battery module.

In addition, the second pole 1131 and the positive terminal of the battery core may also be fastened and electrically connected through welding. To improve reliability of an electrical connection between the second pole 1131 and the battery core, a second connecting part 1133 may be disposed at the first end of the second pole 1131. In an extension direction perpendicular to the second pole 1131 (that is, the thickness direction of the cover plate body), a cross-sectional area of the second connecting part 1133 is greater than a cross-sectional area of the second pole 1131, so that a large welding surface can be implemented when the second pole 1131 is electrically connected to the battery core through the second connecting part 1133.

Similarly, the second pole 1131 and the second conductive sheet 1132 are also separately insulated from the cover plate body 111. During specific implementation, the second electrode assembly 113 may further include a second sealing ring 1134, and the second sealing ring 1134 is compressed and disposed between an outer wall of the second pole 1131 and an inner wall of the second mounting hole 1112, so that the second pole 1131 can be insulated from the cover plate body 111, and sealing at the second mounting hole 1112 can be implemented, to reduce a risk of electrolyte leakage through the second mounting hole 1112. In addition, the second electrode assembly 113 may further include a second insulating member 1135, and the second insulating member 1135 is disposed between the second conductive sheet 1132 and the cover plate body 111, to insulate the second conductive sheet 1132 from the cover plate body 111. A second avoidance hole 11351 may be provided at a position corresponding to the second mounting hole 1112 on the second insulating member 1135, so that the second end of the second pole 1131 can be electrically connected to the second conductive sheet 1132 through the second avoidance hole 11351. In addition, a second groove 11352 may also be provided on a surface that is of the second insulating member 1135 and that faces away from the cover plate body 111, and the second conductive sheet 1132 may be embedded in the second groove 11352, to improve mounting reliability of the second conductive sheet 1132 on the second insulating member 1135. For example, a material of the second insulating member 1135 includes but is not limited to plastic, and a resistance value of the second insulating member 1135 may not be less than 200 mQ@500 V.

In some embodiments, to prevent the first pole 1121 and the second pole 1131 from being electrically connected to the cover plate body 111 on the second side of the cover plate body 111, the battery cover plate 110 may further include a third insulating member 1136. The third insulating member 1136 is approximately the same as the cover plate body 111 in shape, and is attached to the second side of the cover plate body 111. A third avoidance hole 11361 may be provided at a position corresponding to the first mounting hole 1111 on the third insulating member 1136, and a fourth avoidance hole 11362 may be provided at a position corresponding to the second mounting hole 1112. The first connecting part 1123 is located on a side that is of the third insulating member 1136 and that faces away from the cover plate body 111, to insulate the first connecting part 1123 from the cover plate body 111 by using the third insulating member 1136. In this case, the first pole 1121 may sequentially pass through the third avoidance hole 11361, the first mounting hole 1111, and the first avoidance hole 11251 to be connected to the first conductive sheet 1122. Similarly, the second connecting part 1133 is located on the side that is of the third insulating member 1136 and that faces away from the cover plate body 111, to insulate the second connecting part 1133 from the cover plate body 111 by using the third insulating member 1136. In this case, the second pole 1131 may sequentially pass through the fourth avoidance hole 11362, the second mounting hole 1112, and the second avoidance hole 11351 to be connected to the second conductive sheet 1132. Similarly, a material of the third insulating member 1136 includes but is not limited to plastic, and a resistance value of the third insulating member 1136 may not be less than 200 mQ@500 V.

In a storage and use process of the battery 100, because side reactions continuously occur between electrolyte and the positive and negative terminals of the battery core, gas is generated. As described above, the interior of the battery 100 is the sealed cavity formed by the battery housing 120 and the battery cover plate 110. Therefore, with continuous accumulation of the gas, pressure inside the battery 100 continuously increases. To prevent a safety problem caused by excessively high internal pressure of the battery 100, in this embodiment of this application, an explosion-proof valve may be further disposed on the battery cover plate 110. When the battery 100 is faulty and the pressure inside the battery 100 is greater than turning-on pressure of the explosion-proof valve, the explosion-proof valve is turned on, to exhaust the gas inside the battery 100, so as to reduce a temperature of the battery 100, release the pressure, and prevent the battery 100 from further experiencing a more serious safety problem, for example, explosion.

Still refer to FIG. 2 and FIG. 3. When the explosion-proof valve 114 is mounted on the cover plate body 111, a first through hole 1113 that communicates the interior and the exterior of the battery 100 may be further provided on the cover plate body 111, and the explosion-proof valve 114 may be welded and fastened on a surface on one side of the cover plate body 111, to block the first through hole 1113. For example, the explosion-proof valve 114 may be disposed on the first side of the cover plate body 111, or may be disposed on the second side of the cover plate body 111. This is not limited in this application, provided that the first through hole 1113 can be blocked. The following embodiment is described by using an example in which the explosion-proof valve 114 is disposed on the second side of the cover plate body 111. It may be understood that, when the battery cover plate 110 further includes the third insulating member 1136, a fifth avoidance hole 11363 may be provided at a position corresponding to the first through hole 1113 on the third insulating member 1136, so that the pressure inside the battery 100 can directly act on the explosion-proof valve 114 through the fifth avoidance hole 11363.

FIG. 4 is a diagram of a structure of the explosion-proof valve 114 according to an embodiment of this application. A notch 1141 is provided on a surface of the explosion-proof valve 114. Because a thickness at the notch 1141 is less than a thickness at another position of the explosion-proof valve 114, structural strength at the notch 1141 is also less than structural strength at the another position. In other words, a position at which the notch 1141 is located is a weak point of the explosion-proof valve 114. Under the action of the pressure inside the battery, when the explosion-proof valve 114 ruptures along the notch 1141, it is considered that the explosion-proof valve 114 is turned on. The notch 1141 may be provided on a surface on a side that is of the explosion-proof valve 114 and that faces the interior of the battery, or may be provided on a surface on a side that is of the explosion-proof valve 114 and that faces away from the interior of the battery. This is not limited in this application. During specific implementation, the notch 1141 may be formed by using a stamping process. A thickness (that is, a residual thickness) at a position corresponding to the notch on the explosion-proof valve 114 may be greater than or equal to 50 µm and less than or equal to 300 µm, to ensure processability of the explosion-proof valve 114, and reduce impact of a fluctuation of the residual thickness during processing on the turning-on pressure of the explosion-proof valve 114. For example, the thickness at the position corresponding to the notch 1141 on the explosion-proof valve 114 may be 50 µm, 100 µm, 200 µm, 300 µm, or the like.

Refer to FIG. 3 and FIG. 4 together. In this embodiment of this application, a projection of the notch 1141 on the surface of the cover plate body 111 may be located in a region defined by the first through hole 1113, and the notch 1141 may define a fastening part 1143 and a flippable part 1142 on the explosion-proof valve 114. A peripheral side of the flippable part 1142 has a connecting side connected to the fastening part 1143, and a position, on the peripheral side of the flippable part 1142, other than the connecting side may be separated from the fastening part 1143 by the notch. When the explosion-proof valve 114 is turned on, the notch 1141 ruptures, so that the flippable part 1142 is flipped along the notch, and the first through hole 1113 is opened. It may be understood that an axis around which the flippable part 1142 is flipped is an extension line of the connecting side of the flippable part 1142. When the flippable part 1142 is flipped along the notch, the connecting side of the flippable part 1142 continues to remain connected to the fastening part 1143. Therefore, after the explosion-proof valve 114 is turned on, the flippable part 1142 does not fall off from the explosion-proof valve 114.

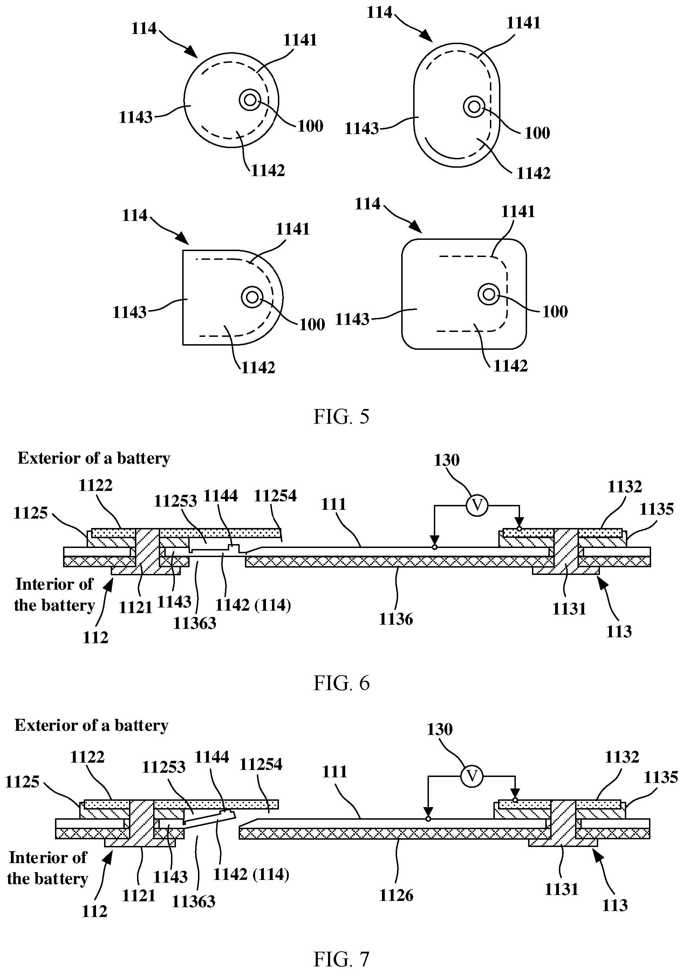

FIG. 5 is a diagram of several possible plane structures of the explosion-proof valve 114 according to an embodiment of this application. In this embodiment of this application, a shape of the explosion-proof valve 114 may be a circle, a racetrack shape, a semicircle, a rectangle, or the like, as shown in FIG. 5; or may be another regular or irregular shape. This is not specifically limited in this application. In addition, a material of the explosion-proof valve 114 may be a metal having a specific deformation capability, for example, aluminum or copper.

In some possible embodiments, a shape of the flippable part 1142 may be designed based on the shape of the explosion-proof valve 114. For example, when the shape of the explosion-proof valve 114 is the circle, the racetrack shape, the semicircle, the rectangle, or the like, the shape of the flippable part 1142 may also be approximately the circle, the racetrack shape, the semicircle, the rectangle, or the like. This helps increase an extension length of the notch 1141, in other words, increase an area of the flippable part 1142, so that after the flippable part 1142 is flipped, the pressure inside the battery can be quickly released. Certainly, in some other embodiments, the shape of the flippable part 1142 may alternatively be designed as another regular or irregular open ring shape. This is not limited in this application. For example, when a perimeter of an outer contour of the explosion-proof valve 114 is C, the extension length of the notch 1141 may be greater than or equal to 0.6C and less than or equal to 0.8C. For example, the extension length of the notch 1141 may be 0.6C, 0.7C, or 0.8C.

Refer to FIG. 6 and FIG. 7 together. FIG. 6 is a diagram of a cross-sectional structure of the battery cover plate 110 according to an embodiment of this application. FIG. 7 is a diagram of a cross-sectional structure of the battery cover plate 110 shown in FIG. 6 after the explosion-proof valve 114 is turned on. In this embodiment, a projection of an outer contour of the first insulating member 1125 on the surface of the cover plate body 111 may cover the first through hole 1113. Alternatively, it may be understood as that a projection region of lines forming an outer edge of the first insulating member 1125 on the surface of the cover plate body 111 covers the first through hole 1113. In this case, a slot 11254 may be provided on a first side wall 11253 of the first insulating member 1125, the slot 11254 penetrates the first insulating member 1125 in a thickness direction of the first insulating member 1125, and the slot 11254 may communicate with the first through hole 1113, to expose the explosion-proof valve 114.

The first conductive sheet 1122 may partially or completely cover the slot 11254. When the pressure inside the battery increases to be greater than the turning-on pressure of the explosion-proof valve 114, the flippable part 1142 of the explosion-proof valve 114 is flipped toward the first side of the cover plate body 111 under the action of the pressure, so that the flippable part 1142 extends into the slot 11254 and is in contact with the first conductive sheet 1122 located above the first insulating member 1125. In this case, an exhaust vent having a consistent shape with the flippable part 1142 is formed on the explosion-proof valve 114, and the gas inside the battery may be exhausted to the exterior of the battery sequentially through the first through hole 1113, the exhaust vent of the explosion-proof valve 114, and the slot 11254, to release the pressure and prevent the battery from further experiencing a more serious safety problem, for example, explosion. It is easy to understand that, when the first conductive sheet 1122 does not completely cover the slot 11254, some gas may be further exhausted through a region that is not covered by the slot 11254. This helps improve a gas exhaust rate and reduce duration used to release the pressure.

Still refer to FIG. 6. In this embodiment, the first through hole 1113 may be a tapered hole, and a diameter of the first through hole 1113 gradually decreases in a direction from the first side of the cover plate body 111 to the second side of the cover plate body 111. After the flippable part 1142 is flipped, a surface on a side that is of the flippable part 1142 and that faces the interior of the battery is inclined relative to the surface of the cover plate body 111. In this case, a diversion channel may be formed between an inner wall of the first through hole 1113 and the surface on the side that is of the flippable part 1142 and that faces the interior of the battery. A diversion function of the diversion channel on the gas in a gas exhaust process can be used to effectively improve the gas exhaust rate.

In some possible embodiments, the connecting side of the flippable part 1142 may be disposed away from the first side wall 11253 of the first insulating member 1125. In this case, an end part of the diversion channel formed by the flippable part 1142 and the first through hole 1113 faces the first side wall 11253. This disposition can shorten a gas exhaust path, and therefore help further improve the gas exhaust rate.

Still refer to FIG. 6 and FIG. 7. Before the flippable part 1142 of the explosion-proof valve 114 is flipped, there is no electrical connection relationship between the explosion-proof valve 114 and either the first electrode assembly 112 or the second electrode assembly 113. After the flippable part 1142 of the explosion-proof valve 114 is flipped, the flippable part 1142 is in contact with the first conductive sheet 1122 above to implement an electrical connection. Because an opening side of the flippable part 1142 continues to remain connected to the fastening part 1143 of the explosion-proof valve 114, and the fastening part 1143 of the explosion-proof valve 114 also remains connected to the cover plate body 111, an electrical connection relationship is established between the first conductive sheet 1122 and the cover plate body 111, in other words, an electrical connection between the first electrode assembly 112 and the cover plate body 111 is implemented.

To improve reliability of the electrical connection between the flippable part 1142 and the first conductive sheet 1122 after the flippable part 1142 is flipped, for example, a protrusion 1144 may be provided on a surface that is of the flippable part 1142 and that faces the first side of the cover plate body 111, and the protrusion 1144 is located on a side that is of the flippable part 1142 and that is away from the opening side. After the flippable part 1142 is flipped, the side that is of the flippable part 1142 and that is away from the opening side is closer to the first conductive sheet 1122. Therefore, the protrusion 1144 is provided on the side to facilitate easier contact with the first conductive sheet 1122, and therefore implement the electrical connection to the first conductive sheet 1122.

Refer to FIG. 4 and FIG. 7 together. In some embodiments, a surface on a side that is of the protrusion 1144 and that is away from the flippable part 1142 may be an arc-shaped surface. In this way, reliability of contact between the protrusion 1144 and the first conductive sheet 1122 can be ensured. In a specific implementation, the protrusion 1144 may include a first section 11441 and a second section 11442. The first section 11441 is provided on a surface of the flippable part 1142, the second section 11442 is provided on a side that is of the first section 11441 and that is away from the flippable part 1142, the first section 11441 may be in a columnar structure, for example, a cylindrical structure, and the second section 11442 may be in a hemisphere structure. A height of the first section 11441 may be greater than or equal to 0.1 mm and less than or equal to 10 mm, and a radius of the second section 11442 may be greater than or equal to 0.1 mm and less than or equal to 10 mm. For example, the height of the first section 11441 may be 0.1 mm, 1 mm, 7 mm, 10 mm, or the like; and the radius of the second section 11442 may be 0.1 mm, 2 mm, 5 mm, 7 mm, or the like.

It is easy to understand that, because the second electrode assembly 113 and the cover plate body 111 are always in an insulated state, when the flippable part 1142 of the explosion-proof valve 114 is not flipped, the cover plate body 111 is uncharged. In this case, a voltage between the second electrode assembly 113 and the cover plate body 111 is a voltage of the second electrode assembly 113. However, after the flippable part 1142 of the explosion-proof valve 114 is flipped, the cover plate body 111 is electrically connected to the first electrode assembly 112, and potentials of the cover plate body 111 and the first electrode assembly 112 are the same. In this case, the voltage between the second electrode assembly 113 and the cover plate body 111 is a voltage between the second electrode assembly 113 and the first electrode assembly 112. Based on this, in this embodiment, whether the explosion-proof valve is turned on can be determined by detecting the voltage between the second electrode assembly 113 and the cover plate body 111.

During specific implementation, the battery may further include a voltage detection circuit 130. The voltage detection circuit 130 is separately connected to the second conductive sheet 1132 of the second electrode assembly 113 and the cover plate body 111 through conducting wires to form a detection loop, to detect a voltage between the second conductive sheet 1132 and the cover plate body 111 in real time. For example, a material of the conducting wire in the detection loop includes, but is not limited to, one or more of metals such as gold, silver, copper, iron, zinc, tin, aluminum, magnesium, cobalt, nickel, manganese, platinum, tantalum, tungsten, rhenium, osmium, iridium, palladium, ruthenium, zirconium, molybdenum, vanadium, titanium, and scandium.

In this embodiment of this application, the BMS may be specifically configured to: when the detected voltage of the voltage detection circuit jumps to a first voltage, determine that the flippable part 1142 of the explosion-proof valve 114 is flipped, that is, determine that the explosion-proof valve 114 is turned on. As described above, the first voltage herein is the voltage between the second electrode assembly 113 and the first electrode assembly 112.

In addition, in some possible embodiments, the battery pack may further include an alarm. The BMS is connected to the alarm, and may be configured to control the alarm to give an early warning after determining that the explosion-proof valve 114 is turned on. For example, in some implementations, the BMS may be configured to cut off an internal loop of the battery core of the battery based on the warning sent by the alarm. Alternatively, in some other implementations, the BMS may further control, based on the warning sent by the alarm, the tripping device in the switch apparatus to perform tripping, to cut off the charging loop/discharging loop of the battery pack, so as to facilitate offline maintenance.

The foregoing descriptions are merely specific implementations of this application, but are not intended to limit the protection scope of this application. Any variation or replacement readily figured out by a person skilled in the art within the technical scope disclosed in this application should fall within the protection scope of this application. Therefore, the protection scope of this application shall be subject to the protection scope of the claims.

## Claims

1. A battery cover plate, comprising a cover plate body, a first electrode assembly, and an explosion-proof valve, wherein
a first through hole is provided on the cover plate body;
the first electrode assembly comprises a first insulating member and a first conductive sheet, the first insulating member is disposed on a first side of the cover plate body and covers the first through hole, a slot is provided on a first side wall of the first insulating member, the slot penetrates the first insulating member in a thickness direction of the first insulating member, the slot communicates with the first through hole, the first conductive sheet (1122) is disposed on a side that is of the first insulating member (1125) and that faces away from the cover plate body (111), and the first conductive sheet (1122) covers at least a part of a region of the slot; and
the explosion-proof valve (114) is disposed on a surface on one side of the cover plate body (111) and covers the first through hole (1113), a notch (1141) is provided on the explosion-proof valve (114), the notch (1141) defines a fastening part and a flippable part (1142) on the explosion-proof valve (114), a peripheral side of the flippable part has a connecting side connected to the fastening part, a remaining position, on the peripheral side of the flippable part, other than the connecting side is separated from the fastening part by the notch, and the flippable part (1142) is configured to: be flipped along the notch toward the first conductive sheet (1122) when subjected to force, and be in contact with the first conductive sheet (1122) after flipping, to electrically connect the cover plate body (111) to the first conductive sheet (1122).

2. The battery cover plate according to claim 1, wherein the connecting side is disposed away from the first side wall of the first insulating member.

3. The battery cover plate according to claim 1, wherein a protrusion is provided on a surface that is of the flippable part and that faces the first side of the cover plate body, and the protrusion is located in a region that is on the flippable part and that is away from the connecting side.

4. The battery cover plate according to claim 3, wherein an end face of the protrusion is an arc-shaped surface.

5. The battery cover plate according to claim 4, wherein the protrusion comprises a first section and a second section, the second section is located on a side that is of the first section and that is away from the flippable part, the first section is in a columnar structure, and an end face that is of the second section and that is away from the first section is an arc-shaped surface.

6. The battery cover plate according to claim 5, wherein the second section is in a hemisphere structure.

7. The battery cover plate according to any one of claims 1 to 6, wherein the first through hole is a tapered hole, and a diameter of the first through hole gradually decreases in a direction from the first side of the cover plate body to a second side of the cover plate body.

8. The battery cover plate according to any one of claims 1 to 6, wherein an extension length of the notch is greater than or equal to 0.6C and less than or equal to 0.8C, and C is a perimeter of an outer contour of the explosion-proof valve.

9. The battery cover plate according to any one of claims 1 to 6, wherein a thickness at a position corresponding to the notch on the explosion-proof valve is greater than or equal to 50 µm and less than or equal to 300 µm.

10. The battery cover plate according to any one of claims 1 to 6, wherein a shape of the explosion-proof valve is a circle, a semicircle, a racetrack shape, or a rectangle.

11. The battery cover plate according to any one of claims 1 to 6, wherein a first mounting hole is provided on the cover plate body, and a first avoidance hole is provided at a position corresponding to the first mounting hole on the first insulating member; and
the first electrode assembly further comprises a first pole, the first pole is disposed in the first mounting hole in an insulated manner, and the first pole is electrically connected to the first conductive sheet through the first avoidance hole.

12. A battery, comprising a battery housing, a battery core, a voltage detection circuit, and the battery cover plate according to any one of claims 1 to 11, wherein the battery housing is fastened to the battery cover plate to form a sealed cavity, the first side of the cover plate body is disposed facing an exterior of the sealed cavity, and the battery core is disposed in the sealed cavity;
the battery cover plate further comprises a second electrode assembly, the second electrode assembly comprises a second insulating member and a second conductive sheet, the second insulating member is disposed on the first side of the cover plate body, and the second conductive sheet is disposed on a side that is of the second insulating member and that faces away from the cover plate body; and
the voltage detection circuit is configured to detect a voltage between the second conductive sheet and the cover plate body.

13. A battery pack, comprising a battery management system and the battery according to claim 12, wherein the battery management system is configured to: when the detected voltage of the voltage detection circuit jumps to a first voltage, determine that the explosion-proof valve is turned on, wherein the first voltage is a voltage between the first electrode assembly and the second electrode assembly.

14. An energy storage system, comprising a power converter and the battery pack according to claim 13, wherein the power converter is configured to perform power conversion on a current and/or a voltage input into the battery pack or a current and/or a voltage output from the battery pack.
